Europäisches Patentamt

European Patent Office

Office européen des brevets

(11) Publication number: **0 178 861**
**B1**

# EUROPEAN PATENT SPECIFICATION

(45) Date of publication of patent specification: **23.01.91**

(51) Int. Cl.⁵: **G 21 C 17/06**

(21) Application number: **85307291.6**

(22) Date of filing: **11.10.85**

(54) Apparatus for testing the fuel rods of a nuclear fuel assembly.

(30) Priority: **15.10.84 US 660787**

(43) Date of publication of application:
**23.04.86 Bulletin 86/17**

(45) Publication of the grant of the patent:
**23.01.91 Bulletin 91/04**

(84) Designated Contracting States:
**BE CH DE FR GB IT LI SE**

(56) References cited:
**EP-A-0 053 066**
**EP-A-0 095 553**
**FR-A-2 298 859**
**FR-A-2 538 155**

(73) Proprietor: **Siemens Aktiengesellschaft**
**Wittelsbacherplatz 2**
**D-8000 München 2 (DE)**

(72) Inventor: **Ho, Quang Dang**
**4601 Grouse Court**
**West Richland Washington 99352 (US)**
Inventor: **van Swam, Leo Francis Petrus**
**1974 Forest Avenue**
**Richland Washington 99352 (US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to apparatus for testing the fuel rods of a nuclear fuel assembly.

From EP—A—0 053 066 an apparatus is known for controlling the parallel fuel rods of an unirradiated nuclear fuel assembly which has just been made and which is intended to be placed in the core of a nuclear reactor. The nuclear fuel assembly e.g. has a square cross-section with the fuel rods arranged in parallel spaced rows.

In the known apparatus the nuclear fuel assembly is disposed vertically and parallel to an axis Oz, so that as many fuel rods are arranged in depth in rows along an axis Ox as in width in rows along an axis Oy, axes Ox, Oy and Oz being perpendicular to one another in twos.

Two elongated probes are parallel to the axis Ox. They are disposed on a carriage belonging to a displacement means for displacing the two probes not only parallel to this axis Ox for inserting the probes between two rows of fuel rods along axis Ox but also for displacing the probes parallel to the axes Oy and Oz as well.

After the fuel element has been exposed in a nuclear reactor for a given length of time, it is necessary to remove it and subject it again to various inspections. For example, it may be checked for spacing, since the rods frequently grow and flex under exposure in the reactor. It is also necessary to check for failed rods by ultrasonic techniques. These tests and others require again the insertion of probes between the rows of the fuel element. Since the irradiated fuel element is highly radioactive, it is necessary that this be done under water in order to remove heat caused by the decay of fission products, as well as to protect persons working with them from radiation.

The invention relates to an improved apparatus according to claim 1 for testing the fuel rods of a nuclear fuel assembly.

It will be appreciated that this improved apparatus is capable of rapidly and accurately inserting a probe between successive rows of fuel rods in a nuclear fuel assembly under remote operating conditions. It can also be used to check the peripheral rods with a variety of other instruments.

Preferred embodiments according to claims 2 and 3 enable the probe to rapidly and accurately traverse all of the rows of fuel rods in the nuclear fuel assembly.

The invention will be better understood from the following description given by way of example and with reference to the accompanying drawings, wherein:

Figure 1 is a perspective view of one form of apparatus in accordance with the invention, being used in relation to a fuel assembly being tested;

Figure 2 is a diagrammatic view showing the operation of the apparatus of Figure 1; and

Figure 3 is an enlarged view of a corner of plate 26, showing movement of pin 22.

The apparatus will now be described in connection with ultrasonic testing means disclosed and claimed in European patent application filed on the same day as the present case and in the same name and claiming priority from U.S. patent application 660,786.

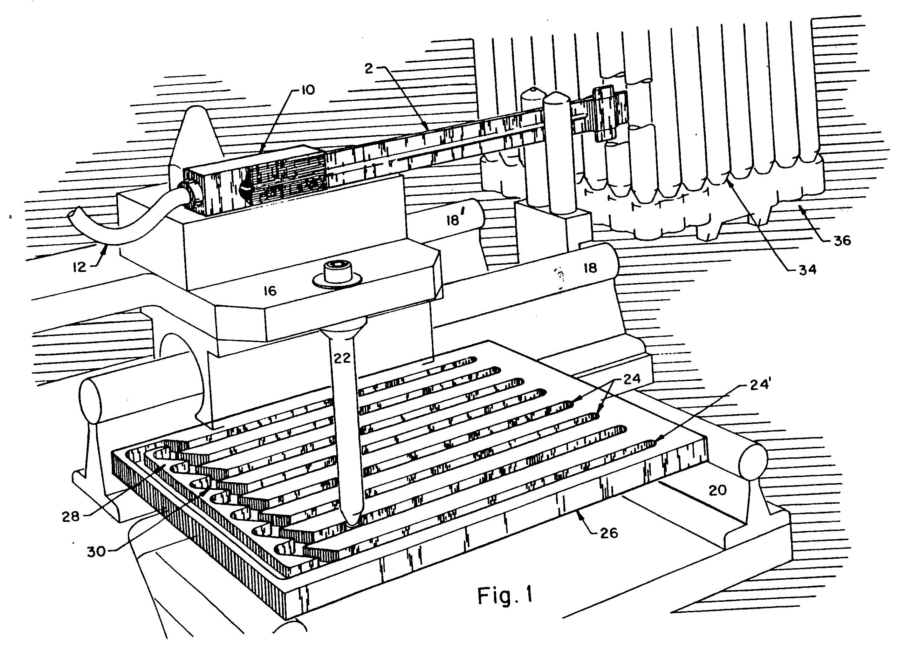

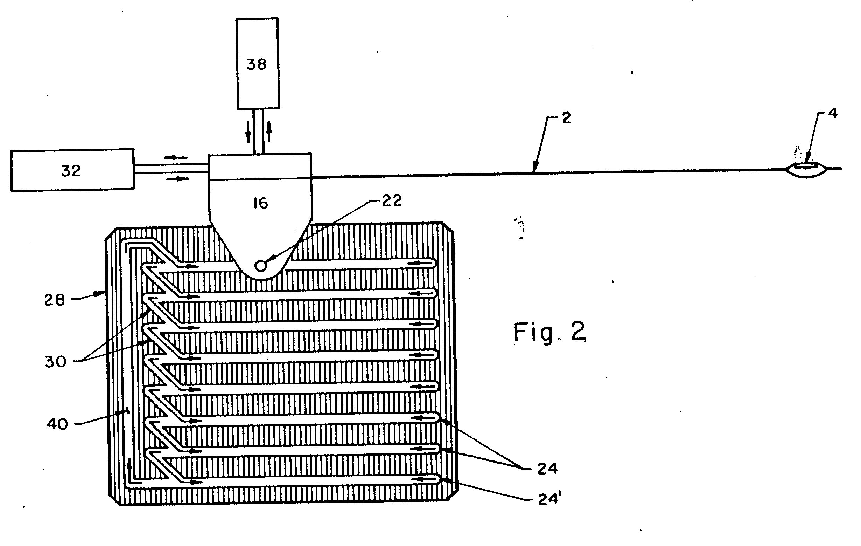

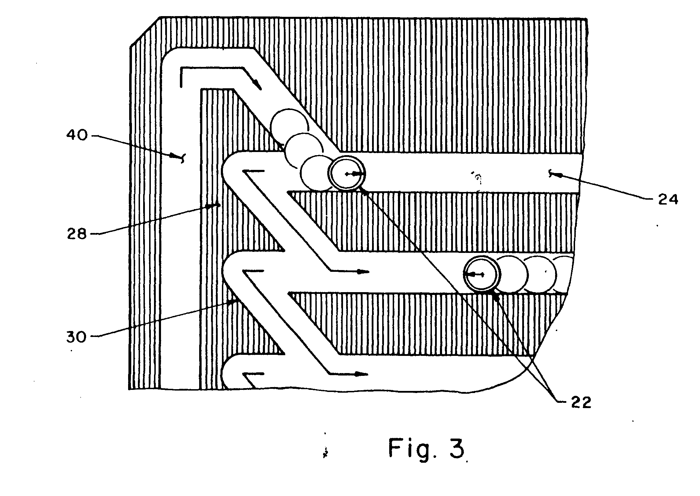

Figures 1, 2 and 3 show the operating means by which the probe is inserted into the fuel assembly. The mounting block 10 is carried on a carrier 16, which rides on rails 18, 18', which provide for longitudinal movement, and on rails 20 which provide for transverse movement. A guide pin 22 slides in grooves 24 of index plate 26. The grooves 24 are open at one end, shown at the left in Figures 1 and 2, and are faced by deflection member 28 which is provided with multiple deflecting surfaces 30, each of which faces one of the grooves 24. The actuating means, which are not shown on Figure 1, are indicated diagrammatically on Figure 2. A reciprocating hydraulic cylinder 32 moves carrier 16 and probe 2 longitudinally of the latter so that the transducer 4 at the free end of the probe is moved along a row of fuel rods 34 in fuel assembly 36. At the same time, pneumatic cylinder 38 exerts a continuous pressure laterally. Under the influence of these cylinders, the pin 22 moves longitudinally along a groove 24 to the right in Figure 1, then returns. When it reaches the left-hand end of the groove (i.e. at the end of the reciprocatory cycle), the force of pressure cylinder 38 drives it laterally along the deflecting surface 30 to the next groove 24, as best shown in Figure 3. These grooves are spaced apart the same distance as the rows of fuel elements 34. The transducer, therefore, passes successively along the rows of fuel elements in the fuel assembly 36. When the pin 22 has moved in both directions along the last groove 24, indicated as 24', the operator reverses the direction of pressure exerted by pressure cylinder 38. The pin 22 then moves back along the groove 40 at the end of index plate 26 to the starting position, carrying with it the carrier 16 and the probe 2.

Plate 26 can be exchanged to provide indexing for different fuel assemblies having differing numbers of rows of rods and/or differing spacing between rows.

## Claims

1. Apparatus for testing the fuel rods of a nuclear fuel assembly, said rods being arranged in parallel rows, comprising a probe (2), a carrier (16) for guiding and moving said probe, reciprocating means (32) for moving said carrier parallel to said rows, means (38) for moving said carrier perpendicular to said rows at the end of each cycle to move said probe from one row of fuel rods to another, means (26) for guiding and moving said carrier and said probe in a predetermined pattern in straight lines parallel to said rows and at right angles to the axes of said fuel rods (34), characterized in that said means comprises a substantially horizontal stationary index plate (26) having parallel grooves (24) in its upper surface, said grooves being each open at one end, means (22) on said carrier for engagement within said grooves, said index plate further comprising deflective surfaces (30) facing the open end of each of said grooves and extending between each adjacent pair of grooves to guide said carrier from one groove to the next in sequence.

2. Apparatus as defined in claim 1, wherein said means for engagement within said grooves (24) is a pin (22) substantially perpendicular to said plate.

3. Apparatus as defined in claim 1, wherein said plate includes a return groove separated from the open ends of said parallel grooves, other than the two extreme grooves, and joined to said two extreme grooves, whereby, when pressure exerted by means (38) for moving said carrier perpendicular to said rows on said carrier is reversed said means (22) for engagement within said grooves, carrier, and probe will return to their starting positions.

**Patentansprüche**

1. Prüfanordnung für die Brennstäbe eines Kernbrennstoffbündels, in dem diese Brennstäbe in parallelen Reihen angeordnet sind, mit einer Sonde (2), einem Träger (16) zum Führen und Bewegen dieser Sonde, einem Mittel (32) zum Hin- und Herbewegen des Trägers (16) parallel zu den Reihen der Stäbe, einem Mittel (38) zum Bewegen des Trägers rechtwinklig zu den Reihen der Stäbe am Ende jedes Zyklus, um die Sonde von einer Reihe der Stäbe zu einer anderen zu bewegen, einem Mittel (26) zum Führen und Bewegen des Trägers (16) und der Sonde in einem vorgegebenen Muster in geraden Linien parallel zu den Reihen der Stäbe und rechtwinklig zu den Achsen der Brennstäbe (34) dadurch gekennzeichnet, daß das letztgenannte Mittel eine im wesentlichen horizontale stationäre Rasterplatte (26) mit parallelen, jeweils an einem Ende offenen Rillen (24) in ihrer Oberseite aufweist, daß am Träger ein Mittel (22) zum Eingreifen in diesen Rillen vorgesehen ist und daß die Rasterplatte mit Ablenkflächen (30) versehen ist, die sich gegenüber dem offenen Ende jeder der Rillen befinden und sich zwischen jedem Paar benachbarter Rillen erstrecken, um den Träger nacheinander von einer Rille in die nächste zu führen.

2. Prüfanordnung nach Anspruch 1, dadurch gekennzeichnet, daß das Mittel zum Eingreifen in die Rillen (24) ein Stift (22) ist, der im wesentlichen senkrecht zur Rasterplatte steht.

3. Prüfanordnung nach Anspruch 1, dadurch gekennzeichnet, daß die Rasterplatte eine Rückführrille aufweist, die getrennt von den offenen Enden der nicht die beiden äußersten Rillen bildenden Rillen und mit diesen beiden äußersten Rillen verbunden ist, so daß bei Umkehr eines durch das Mittel (38) zum Bewegen des Trägers (16) rechtwinklig zu den Reihen der Stäbe auf den Träger (16) ausgeübten Drucks das Mittel (22) zum Eingreifen in die Rillen, der Träger und die Sonde in ihre Ausgangspositionen zurückkehren.

**Revendications**

1. Dispositif de contrôle des crayons combustibles d'un assemblage combustible nucléaire, ces crayons étant disposés en rangées parallèles, comprenant un support (16) destiné à guider et à déplacer la sonde, des moyens de va-et-vient (32) destinés à déplacer le support parallèlement aux rangées, des moyens (38) destinés à déplacer le support perpendiculairement aux rangées à la fin de chaque cycle, de manière à faire passer la sonde d'une rangée de crayons combustibles à l'autre, des moyens (26) destinés à guider et à déplacer le support et la sonde suivant une configuration déterminée à l'avance, en lignes droites, parallèlement aux rangées et à angle droit par rapport aux axes des crayons combustibles (34), caractérisé en ce que ces moyens comprennent une plaque d'indexation (26) fixe, sensiblement horizontale et ayant des gorges (24) parallèles ménagées dans sa surface supérieure, ces gorges étant chacune ouverte à une extrémité, des moyens (22) sur le support destinés à venir en contact avec les gorges, la plaque d'indexation comprenant en outre des surfaces de déviation (30) faisant face à l'extrémité ouverte de chacune des gorges et s'étendant entre chaque paire adjacente de gorges, pour guider séquentiellement le support d'une gorge à la suivante.

2. Dispositif suivant la revendication 1, dans lequel les moyens destinés à venir en contact avec les gorges (24) sont constitués d'une broche (22) sensiblement perpendiculaire à la plaque.

3. Dispositif suivant la revendication 1, dans lequel la plaque comprend une gorge de retour séparée des extrémités ouvertes des gorges parallèles, autre que les deux gorges extrêmes, et réunie aux deux gorges extrêmes, de sorte que, quand on inverse la pression exercée par les moyens (38) destinés à déplacer le support perpendiculairement à ces rangées, les moyens (22) destinés à venir en contact avec les gorges, le support et la sonde retournent à leur position de départ.

Fig. 1

Fig. 2

EP 0 178 861 B1

Fig. 3